# EUROPEAN PATENT APPLICATION

(11) **EP 3 309 836 A1**
(43) Date of publication of application: **18.04.2018**
(21) Application number: 17162330.9
(22) Date of filing: 22.03.2017
(51) Int. Cl.: H01L 27/02

(54) **ELECTROSTATIC DISCHARGE CIRCUIT**

(30) Priority: 12.10.2016 US 201662406968 P; 21.02.2017 US 201715437626
(71) Applicant: eMemory Technology Inc., Hsin-Chu 30075 (TW)
(72) Inventor: TING, Yun-Jen, Hsinchu County 302 (TW); LAI, Chih-Wei, Taipei City 112 (TW); SHEN, Chiun-Chi, Hsinchu County 310 (TW); HSU, Hsin-Kun, Hsinchu County 302 (TW)
(74) Representative: Krauns, Christian

(57) **Abstract**

An ESD circuit is connected with a pad. The ESD circuit includes a P-type transistor, an N-type transistor and a control circuit. A first source/drain terminal of the P-type transistor is connected with the pad. A first source/drain terminal of the N-type transistor is connected with a second source/drain terminal of the P-type transistor. A second source/drain terminal of the N-type transistor is connected with a first node. The control circuit is connected with the pad, the first node, a gate terminal of the P-type transistor and a gate terminal of the N-type transistor. When the pad receives an ESD zap, the control circuit provides a first voltage drop to the P-type transistor and provides a second voltage drop to the N-type transistor, so that the P-type transistor and the N-type transistor are turned on.

## Description

### FIELD OF THE INVENTION

The present invention relates to a circuit, and more particularly to an electrostatic discharge (ESD) circuit.

### BACKGROUND OF THE INVENTION

For increasing the operating speed and integration level of integrated circuits (ICs), the size of semiconductor devices in a CMOS IC is gradually decreased, and the gate oxide layer of the semiconductor device becomes thinner and thinner. Consequently, the breakage voltage of the gate oxide layer is reduced, and the breakage voltage at the PN junction of the semiconductor device is also reduced.

As known, an ESD zapping effect may lead to damage of the integrated circuit. For avoiding the ESD zapping effect, the integrated circuit is usually equipped with an ESD circuit. The ESD circuit provides an ESD current path. Since the ESD current flows through the ESD current path, the internal circuit of the integrated circuit is not damaged by the ESD current.

### SUMMARY OF THE INVENTION

An embodiment of the present invention provides an electrostatic discharge (ESD) circuit connected with a pad, the ESD circuit comprising: plural transistors coupled between the pad and a first node in a cascode configuration; a control circuit connected with the pad, the first node and gate terminals of the plural transistors, wherein a first portion of the plural transistors comprises at least one P-type transistors and a second portion of the plural transistors comprises at least one N-type transistor, wherein when the pad receives an ESD zap, the control circuit provides plural voltage drops to the plural transistors, respectively, and the plural transistors are turned on in response to the voltage drops.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 is a schematic circuit diagram illustrating an ESD circuit according to a first embodiment of the present invention;
FIG. 2A is a plot illustrating the relationship between the voltage and the current of the ESD circuit according to the first embodiment of the present invention;
FIG. 2B is a plot illustrating the relationship between the voltage and the current of the ESD circuit according to the first embodiment of the present invention when the HBM test is performed;
FIG. 3 is a schematic circuit diagram illustrating an ESD circuit according to a second embodiment of the present invention;
FIG. 4A is a schematic circuit diagram illustrating the ESD circuit of the second embodiment when a negative ESD zap is received;
FIG. 4B is a schematic circuit diagram illustrating the ESD circuit of the second embodiment when a positive ESD zap is received;
FIG. 5A is a plot illustrating the relationship between the voltage and the current of the ESD circuit according to the second embodiment of the present invention;
FIG. 5B is a plot illustrating the relationship between the voltage and the current of the ESD circuit according to the second embodiment of the present invention when the HBM test is performed;
FIG. 6 is a schematic circuit diagram illustrating an ESD circuit according to a third embodiment of the present invention; and
FIG. 7 is a schematic circuit diagram illustrating an ESD circuit according to a fourth embodiment of the present invention.

### DETAILED DESCRIPTION OF PREFERRED EMBODIMENTS

Take a nonvolatile memory as an example. During a program cycle of a nonvolatile memory, a program voltage is provided to the nonvolatile memory to program the cells of the nonvolatile memory. Similarly, during an erase cycle of a nonvolatile memory, an erase voltage is provided to the nonvolatile memory to erase the cells of the nonvolatile memory.

Generally, the program voltage or the erase voltage is very close to the withstanding voltage of the semiconductor device but is not high enough to destroy the semiconductor device. For example, a semiconductor device of the nonvolatile memory is a MOS transistor. The operating voltage of the MOS transistor is 1.8V, and the program voltage of the MOS transistor is 6V. The MOS transistor can withstand the voltage stress of 6V. If the voltage stress is increased to 7V or higher, the MOS transistor is possibly damaged.

For solving the above drawbacks, it is necessary to install an ESD circuit in the nonvolatile memory. The turn-on threshold voltage of the ESD circuit is slightly higher than 6V and close to 6V. When the ESD zapping effect occurs in the nonvolatile memory, the ESD current can be dissipated away through the ESD circuit. Consequently, the internal circuit of the nonvolatile circuit can be protected.

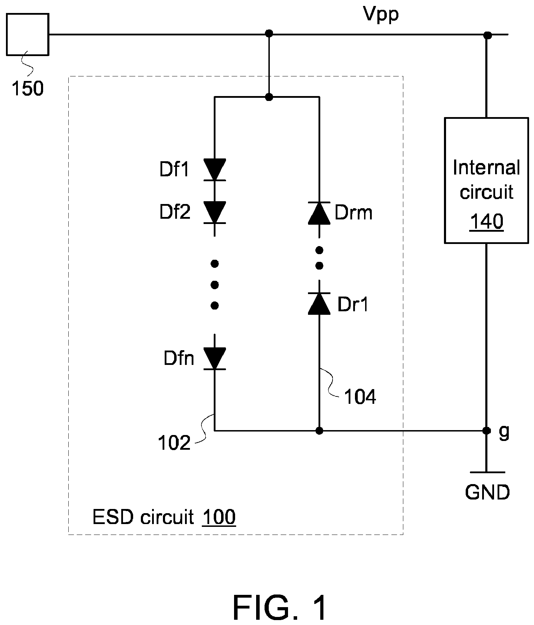

FIG. 1 is a schematic circuit diagram illustrating an ESD circuit according to a first embodiment of the present invention. The ESD circuit 100 and an internal circuit 140 are connected between a pad 150 which is at a first supply voltage Vpp and a second supply voltage GND. The first supply voltage Vpp is transmitted from the pad 150 to the ESD circuit 100 and the internal circuit 140. The second supply voltage GND is transmitted to the ESD circuit 100 and an internal circuit 140 through a node g.

The ESD circuit 100 comprises a first ESD current path 102 and a second ESD current path 104. The first ESD current path 102 comprises n diodes Df1∼Dfn. The n diodes Df1∼Dfn are connected between the first supply voltage Vpp and the second supply voltage GND in series. The second ESD current path 104 comprises m diodes Dr1∼Drm. The m diodes Dr1∼Drm are connected between the first supply voltage Vpp and the second supply voltage GND in series. In an embodiment, the second supply voltage GND is 0V.

The turn-on threshold voltage of the first ESD current path 102 can be expressed as n×Von, wherein Von is a cut-in voltage of the diode. For example, the cut-in voltage Von is 0.7V. If the voltage difference (Vpp-0V) between the first supply voltage Vpp and the second supply voltage GND is higher than n×Von, the first ESD current path 102 is turned on.

As mentioned above, the turn-on threshold voltage of the first ESD current path 102 (n×Von) must be set higher than a nominal voltage of the first supply voltage Vpp (for example, 6V). If the turn-on threshold voltage of the first ESD current path 102 (n×Von) is set lower than the nominal voltage of the first supply voltage Vpp, the first ESD current path 102 is mis-triggered. Similarly, the turn-on threshold voltage of the first ESD current path 102 (n×Von) must be set lower than a breakdown voltage of the second ESD current path 104 which can be expressed as m×Vbj, wherein Vbj is a junction breakdown voltage of the diode. If the turn-on threshold voltage of the first ESD current path 102 n×Von is set higher than the breakdown voltage of the second ESD current path 104 (m×Vbj), the second ESD current path 104 is mis-triggered. For example, when a positive electrostatic voltage is received by the pad 150, the first ESD current path 102 is immediately turned on to prevent the diode breakdown of the second ESD current path 104.

Similarly, the turn-on threshold voltage of the second ESD current path 104 can be expressed as m×Von. If the voltage difference (0V-Vpp) between the second supply voltage GND and the first supply voltage Vpp is higher than m×Von, the second ESD current path 104 is turned on.

For example, the cut-in voltage Von of the diode is 0.7V, the breakdown voltage Vbj of the diode is 4V, and the operating voltage of the internal circuit 140 is in the range between 0V and 6V. That is, the first ESD current path 102 needs to comprise at least 9 serially-connected diodes (9×0.7V =6.3V), and the second ESD current path 104 needs to comprise at least 2 serially-connected diodes (2×4V =8V). Consequently, the first ESD current path 102 or the second ESD current path 104 will not be mis-triggered.

Due to the process variation, the cut-in voltage Von of the diode is possibly subjected to a change. For avoiding the change of the cut-in voltage Von of the diode, an additional diode is added to the first ESD current path 102. Consequently, in the normal working state of the ESD circuit 100, the first ESD current path 102 is not mis-triggered.

If a positive ESD zap is received by the pad 150, the first ESD current path 102 is turned on. Meanwhile, the ESD current flows from the pad 150 to the node g through the first ESD current path 102. If a negative ESD zap is received by the pad 150, the second ESD current path 104 is turned on. Meanwhile, the ESD current flows from the node g to the pad 150 through the second ESD current path 104.

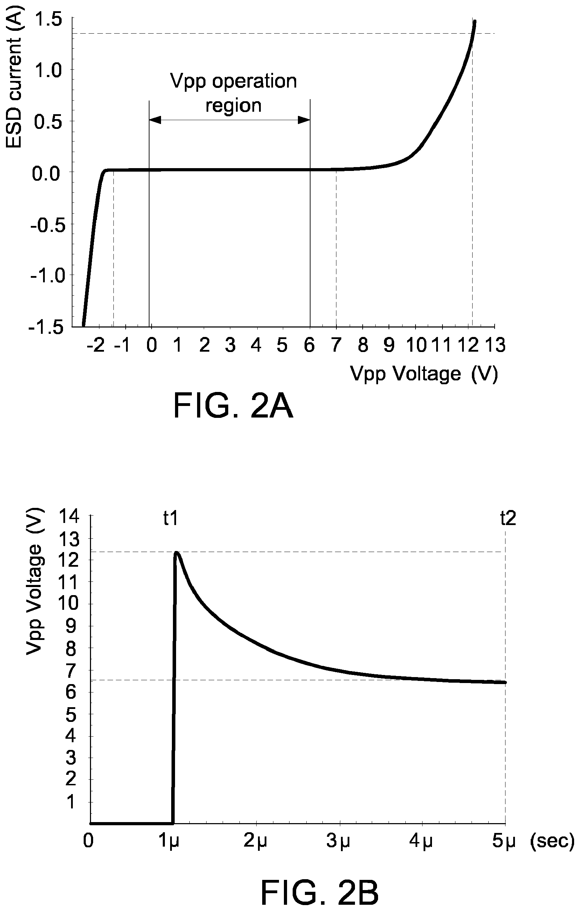

FIG. 2A is a plot illustrating the relationship between the voltage and the current of the ESD circuit according to the first embodiment of the present invention. In this embodiment, the first ESD current path 102 comprises 10 serially-connected diodes (i.e., n=10), and the second ESD current path 104 comprises 2 serially-connected diodes (i.e., n=2). Moreover, the operation region of the first supply voltage Vpp is 0V∼6V. If the first supply voltage Vpp received by the internal circuit 140 is in the range between 0V and 6V, the ESD circuit 100 can protect the internal circuit 140.

If the first supply voltage Vpp is higher than 6V or the first supply voltage Vpp is lower than 0V, the ESD zapping effect possibly occurs. Consequently, the ESD circuit 100 is operated according to the change of the first supply voltage Vpp. When the first supply voltage Vpp is increased to 7V, the ESD current reaches 1µA. Meanwhile, it is considered that the first ESD current path 102 is turned on. When the first supply voltage Vpp is decreased to -1.4V, the ESD current reaches -1µA. Meanwhile, it is considered that the second ESD current path 104 is turned on.

FIG. 2B is a plot illustrating the relationship between the voltage and the zapping time of the ESD circuit according to the first embodiment of the present invention when the HBM test is performed. Take a human body mode (HBM) test for example. When an electrostatic voltage of 2KV is applied to the pad 150, the first supply voltage Vpp is increased to 12V and the ESD current is increased to 1.33A. Consequently, the first ESD current path 102 is turned on, and the ESD current is transferred to the node g through the first ESD current path 102.

Please refer to FIG. 2B again. At the time point t1, the electrostatic voltage of 2KV is received by the pad 150. The first supply voltage Vpp is increased to 12V in a very short time. Consequently, the first ESD current path 102 is turned on. Moreover, as shown in FIG. 2A, the ESD current is 1.33A at the time point t1.

Since the first ESD current path 102 is turned on, the first supply voltage Vpp is decreased to 7V at the time point t2. That is, the first supply voltage Vpp is decreased to 7V within 4µs by the ESD circuit 100. Consequently, the semiconductor device in the internal circuit is protected from damage.

Moreover, the ESD current possibly flows through the ESD current path 102 or the second ESD current path 104. For preventing the ESD current to burn out the diodes Df1∼Dfn and Dr1∼Drm, the sizes of the diodes Df1∼Dfn and Dr1∼Drm should be large enough. However, due to the large sizes of the diodes Df1∼Dfn and Dr1∼Drm, the parasitic resistance is small. Consequently, the standby leakage of the ESD current is increased. The standby leakage may be decreased by increasing the numbers n and m of the serially-connected diodes of the two ESD current path 102 and 104. However, it should be carefully considered whether the increased turn-on threshold voltages of n×Von and m×Vbj fall within the criteria described above or not.

As shown in FIG. 2B, the first supply voltage Vpp is decreased to a voltage level lower than 7V after the ESD zapping effect is eliminated. However, since the first supply voltage Vpp is maintained at a level near 7V for a certain time period, the semiconductor device in the internal circuit 140 is still influenced by the voltage stress of 7V. Consequently, the characteristics of the semiconductor device are deteriorated, and the use life of the semiconductor device is reduced.

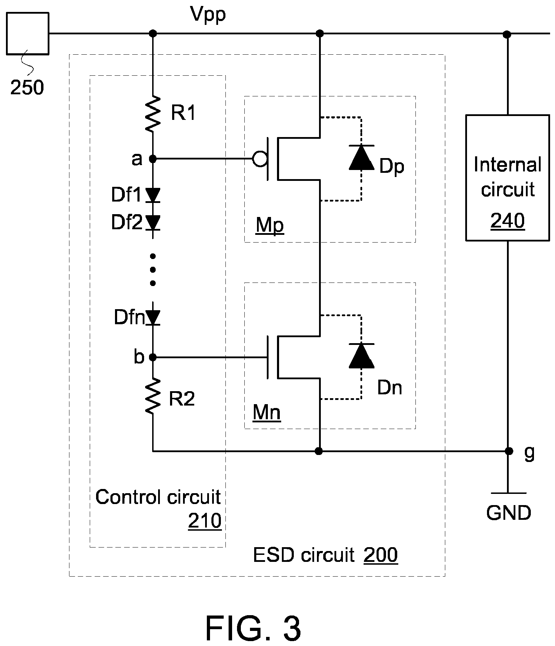

FIG. 3 is a schematic circuit diagram illustrating an ESD circuit according to a second embodiment of the present invention. The ESD circuit 200 and an internal circuit 240 are connected between a first supply voltage Vpp and a second supply voltage GND. The first supply voltage Vpp is transmitted from a pad 250 to the ESD circuit 200 and the internal circuit 240. The second supply voltage GND is transmitted to the ESD circuit 200 and the internal circuit 240 through a node g.

In this embodiment, the ESD circuit 200 comprises a control circuit 210, a P-type transistor Mp and an N-type transistor Mn. A first source/drain terminal of the P-type transistor Mp is connected with the pad 250 to receive the first supply voltage Vpp. A gate terminal of the P-type transistor Mp is connected with the control circuit 210. A first source/drain terminal of the N-type transistor Mn is connected with a second source/drain terminal of the P-type transistor Mp. A gate terminal of the N-type transistor Mn is connected with the control circuit 210. A second source/drain terminal of the N-type transistor Mn receives the second supply voltage GND. A body terminal of the P-type transistor Mp is selectively connected with the pad 250 to receive the first supply voltage Vpp. A body terminal of the N-type transistor Mn is selectively connected with the node g to receive the second supply voltage GND.

Moreover, the P-type transistor Mp has a parasitic diode Dp. A cathode terminal of the parasitic diode Dp is connected with the first source/drain terminal of the P-type transistor Mp. An anode terminal of the parasitic diode Dp is connected with the second source/drain terminal of the P-type transistor Mp. Similarly, the N-type transistor Mn has a parasitic diode Dn. A cathode terminal of the parasitic diode Dn is connected with the first source/drain terminal of the N-type transistor Mn. An anode terminal of the parasitic diode Dn is connected with the second source/drain terminal of the N-type transistor Mn.

The control circuit 210 comprises a first resistor R1, a second resistor R2 and n diodes Df1∼Dfn. A first terminal of the first resistor R1 receives the first supply voltage Vpp. A second terminal of the first resistor R1 is connected with a node a. A first terminal of the second resistor R2 receives the second supply voltage GND. A second terminal of the second resistor R2 is connected with a node b. The n diodes Df1∼Dfn are serially connected between the node a and the node b. Moreover, a gate terminal of the P-type transistor Mp is connected with the node a, and a gate terminal of the N-type transistor Mn is connected with the node b.

An anode terminal of the first diode Df1 of the n diodes Df1∼Dfn is connected with the node a. A cathode terminal of the last diode Dfn of the n diodes Df1∼Dfn is connected with the node b. The anode terminal of any of the other diodes is connected with the cathode terminal of the previous diode, and the cathode of any of the other diodes is connected with the anode terminal of the next diode.

In this embodiment, a first ESD current path is defined by the first source/drain terminal of the P-type transistor Mp, a channel region of the P-type transistor Mp, the second source/drain terminal of the P-type transistor Mp, the first source/drain terminal of the N-type transistor Mn, a channel region of the N-type transistor Mn and the second source/drain terminal of the N-type transistor Mn collaboratively. The on/off states of the first ESD current path is controlled by the control circuit 210.

Moreover, a second ESD current path is defined by the second source/drain terminal of the N-type transistor Mn, the parasitic diode Dn of the N-type transistor Mn, the first source/drain terminal of the N-type transistor Mn, the second source/drain terminal of the P-type transistor Mp, the parasitic diode Dp of the P-type transistor Mp and the first source/drain terminal of the P-type transistor Mp collaboratively.

For example, in each of the diodes Df1∼Dfn, Dp and Dn, the cut-in voltage Von is 0.7V and the breakdown voltage Vbj is 4V. Moreover, the operating voltage of the internal circuit 240 is in the range between 0V and 6V. For avoiding mis-triggering the first ESD current path, the control circuit 210 of the ESD circuit 200 needs to comprise at least 9 serially-connected diodes (0.7V×9=6.3V). Moreover, the second ESD current path 104 comprises 2 serially-connected diodes Dp and Dn (4V×2=8V). Consequently, when the internal circuit 240 is in the normal working state, the first ESD current path or the second ESD current path is not mis-triggered.

The turn-on threshold voltage of the first ESD current path is determined by the n serially-connected diodes Df1∼Dfn of the control circuit 210. For example, the control circuit 210 comprises 9 serially-connected diodes. That is, if the voltage difference (Vpp-0V) between the first supply voltage Vpp and the second supply voltage GND is higher than 6.3V (i.e., 9×0.7V=6.3V), the first ESD current path is turned on.

The turn-on threshold voltage of the second ESD current path is 1.4V (i.e., 2×0.7=1.4V). If the voltage difference between the second supply voltage GND and the first supply voltage Vpp (0V-Vpp) is higher than 1.4V, the second ESD current path is turned on.

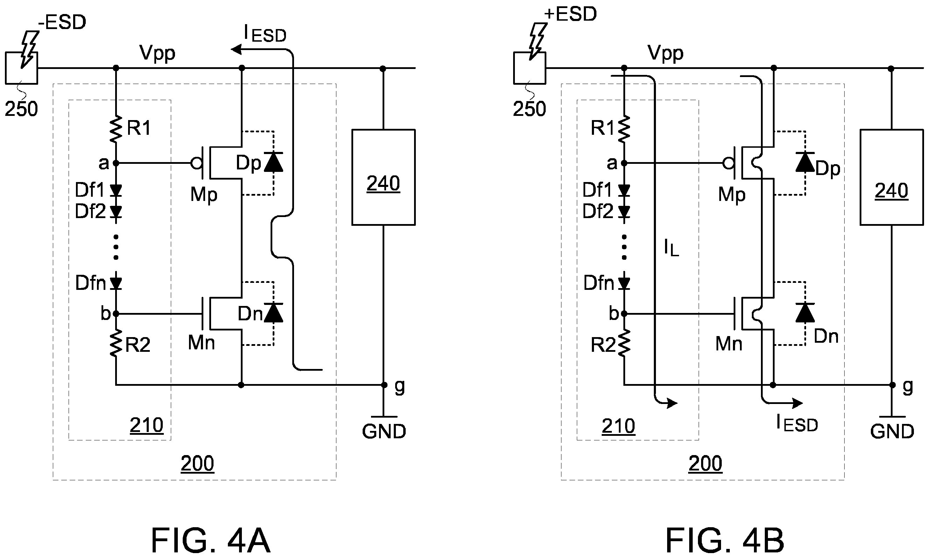

FIG. 4A is a schematic circuit diagram illustrating the ESD circuit of the second embodiment when a negative ESD zap is received. When the negative ESD zap is received by the pad 250, the second ESD current path is turned on. Consequently, the ESD current I_{ESD} flows from the node g to the pad 250 through the parasitic diodes Dn and Dp.

FIG. 4B is a schematic circuit diagram illustrating the ESD circuit of the second embodiment when a positive ESD zap is received. When the positive ESD zap is received by the pad 250, the first supply voltage Vpp is increased rapidly. When the first supply voltage Vpp is higher than the turn-on threshold voltage of the first ESD current path, a loading current I_{L} is generated. The loading current I_{L} flowing through the first resistor R1 of the control circuit 210 results in a first voltage drop. Since the voltage difference between the first source/drain terminal and the gate terminal of the P-type transistor Mp is equal to the first voltage drop, the P-type transistor Mp is turned on in response to the first voltage drop. Moreover, the loading current I_{L} flowing through the second resistor R2 of the control circuit 210 results in a second voltage drop. Since the voltage difference between the gate terminal and the second source/drain terminal of the N-type transistor Mn is equal to the second voltage drop, the N-type transistor Mn is turned on in response to the second voltage drop. Consequently, the second ESD current path is turned on. Under this circumstance, the ESD current I_{ESD} flows from the pad 250 to the node g through the channel region of the P-type transistor Mp and the channel region of the N-type transistor Mn. Moreover, the magnitude of the ESD current I_{ESD} is much higher than the magnitude of the loading current I_{L}.

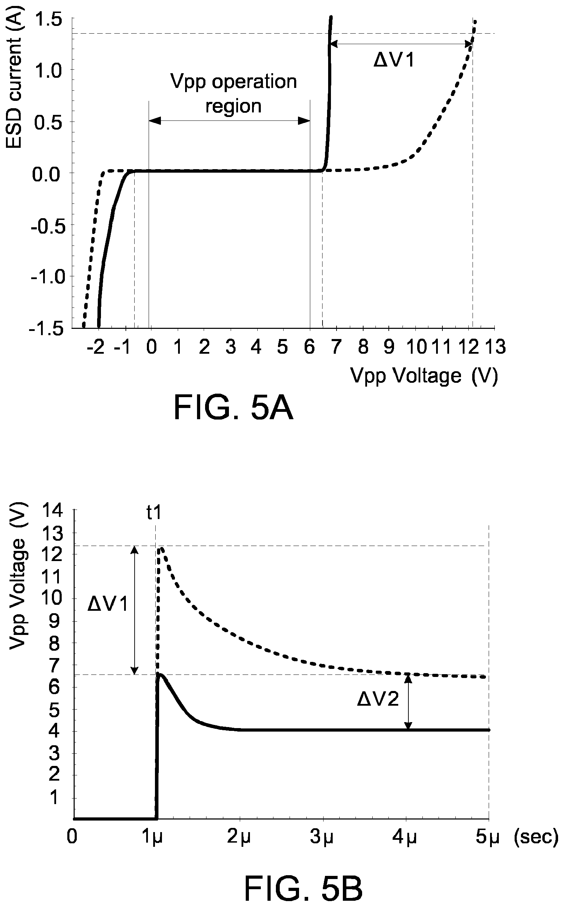

FIG. 5A is a plot illustrating the relationship between the voltage and the current of the ESD circuit according to the second embodiment of the present invention. Moreover, the operation region of the first supply voltage Vpp is 0V∼6V. If the first supply voltage Vpp received by the internal circuit 240 is in the range between 0V and 6V, the ESD circuit 200 can protect the internal circuit 240.

If the first supply voltage Vpp is higher than 6V or the first supply voltage Vpp is lower than 0V, the ESD zapping effect possibly occurs. Consequently, the ESD circuit 200 is operated according to the change of the first supply voltage Vpp. When the first supply voltage Vpp is increased to 6.3V, the ESD current reaches 1µA. Meanwhile, it is considered that the first ESD current path is turned on. When the first supply voltage Vpp is decreased to -0.7V, the ESD current reaches -1µA. Meanwhile, it is considered that the second ESD current path is turned on.

FIG. 5B is a plot illustrating the relationship between the voltage and the zapping time of the ESD circuit according to the second embodiment of the present invention when the HBM test is performed. Take a human body mode (HBM) test for example. When an electrostatic voltage of 2KV is applied to the pad 250, the first supply voltage Vpp is increased to 6.5V. Consequently, the first ESD current path is turned on, and the ESD current is transferred to the node g through the first ESD current path. The dotted curve indicates that the first supply voltage Vpp is increased to 12V by the ESD circuit 100 of the first embodiment. The solid curve indicates first supply voltage Vpp is only increased to 6.5V by the ESD circuit 200 of this embodiment. The difference ΔV1 between the two curves is about 5.5V.

Please refer to FIG. 5B again. At the time point t1, the electrostatic voltage of 2KV is received by the pad 250. The first supply voltage Vpp is increased to 6.5V in a very short time. Consequently, the first ESD current path is turned on.

Since the first ESD current path is turned on, the first supply voltage Vpp is decreased to the voltage level lower than 4V within 1µs by the ESD circuit 200. The dotted curve indicates that the first supply voltage Vpp is decreased to a voltage level lower than 7V by the ESD circuit 100 of the first embodiment after the ESD zapping effect is eliminated. The solid curve indicates that first supply voltage Vpp is maintained at a voltage level near 4V by the ESD circuit 200 of this embodiment after the ESD zapping effect is eliminated. The difference ΔV2 between the two curves is about 2.5V. Since the first supply voltage Vpp is maintained at the voltage level near 4V, the semiconductor device in the internal circuit 240 is not influenced. In other words, the discharge performance of the ESD circuit of this embodiment is enhanced.

For effectively protecting the internal circuit from the ESD zapping effect, the ESD circuit of the second embodiment can be further modified.

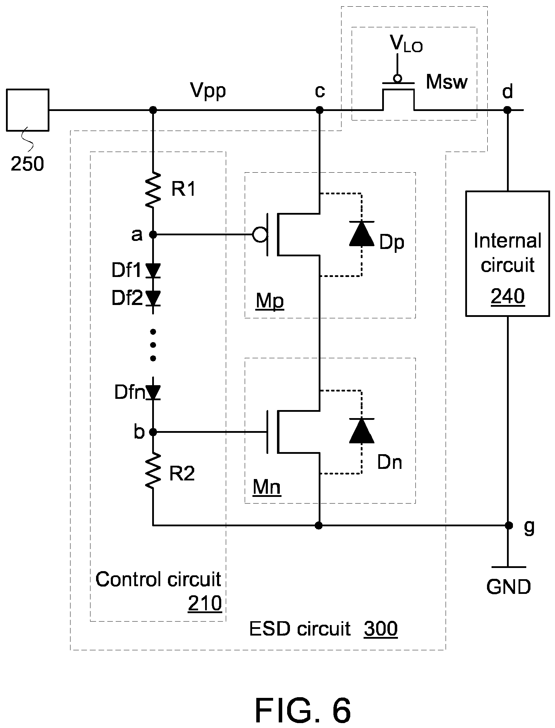

FIG. 6 is a schematic circuit diagram illustrating an ESD circuit according to a third embodiment of the present invention. In comparison with the ESD circuit 200 of the second embodiment, the ESD circuit 300 of this embodiment further comprises a switch transistor Msw. The switch transistor Msw is coupled between a node c and a node d.

A first source/drain terminal of the switch transistor Msw is connected with the node c. A second source/drain terminal of the switch transistor Msw is connected with the node d. A gate terminal of the switch transistor Msw receives a normal low signal V_{LO}. When the integrated circuit (IC) is powered, the gate terminal of the switch transistor Msw receives the normal low signal V_{LO}. Consequently, the switch transistor Msw is turned on, and the first supply voltage Vpp is transmitted to the internal circuit 240.

When the integrated circuit (IC) is not powered, the normal low signal V_{LO} is in a floating state. Consequently, the switch transistor Msw is turned off to isolate the node c from the node d.

If the pad 250 receives the ESD zap when the integrated circuit (IC) is not powered, the first ESD current path or the second ESD current path is turned on to protect the internal circuit 240. In addition, since the switch transistor Msw is turned off, the internal circuit 240 can be further protected from the ESD zapping effect.

In the ESD circuit 200 of the second embodiment or the ESD circuit 300 of the third embodiment, the diodes Df1∼Dfn of the control circuit 210 are used to detect the change of the first supply voltage Vpp. In other words, the ESD current does not flow through these diodes Df1∼Dfn. Under this circumstance, the diodes Df1∼Dfn having smaller sizes are suitably applied to the control circuit 210. In comparison with the ESD circuit 100 of the first embodiment, the ESD circuit 200 of the second embodiment or the ESD circuit 300 of the third embodiment has a smaller layout area.

Moreover, in the ESD circuit 200 or the ESD circuit 300, the P-type transistor Mp and the N-type transistor Mn are connected between the first supply voltage Vpp and the second supply voltage GND in a cascode configuration. The P-type transistor Mp and the N-type transistor Mn cooperate with the control circuit 210 to detect the ESD zap from the pad 250. Consequently, the ESD circuit 200 or the ESD circuit 300 can effectively protect the internal circuit 240.

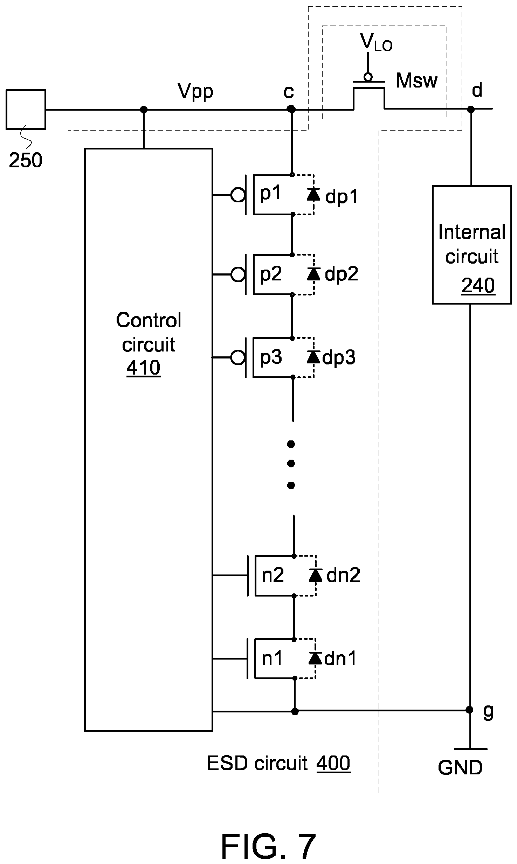

As mentioned above, one P-type transistor Mp and one N-type transistor Mn are connected between the first supply voltage Vpp and the second supply voltage GND in the cascode configuration. It is noted that numerous modifications and alterations may be made while retaining the teachings of the invention. FIG. 7 is a schematic circuit diagram illustrating an ESD circuit according to a fourth embodiment of the present invention. The switch transistor Msw of the ESD circuit 400 is similar to that of FIG. 6, and is not redundantly described herein.

In the ESD circuit 400, plural transistors p1∼p3 and n1∼n2 are coupled between the first supply voltage Vpp and the second supply voltage GND in the cascode configuration. Also, the parasitic diode dp1∼dp3 and dn1∼dn2 are serially connected between the first supply voltage Vpp and the second supply voltage GND. According to the fourth embodiment of the present invention, a first portion of the plural transistors comprises plural P-type transistors and a second portion of the plural transistors comprises at least one N-type transistor. For example, the first portion comprises three P-type transistors p1∼p3 and the second portion comprises two N-type transistors n1∼n2.

Furthermore, the control circuit 410 connected with the first supply voltage Vpp, the second supply voltage GND and gate terminals of the plural transistors p1∼p3 and n1∼n2. When the pad 250 receives an ESD zap, the control circuit 410 provides plural voltage drops to the plural transistors p1∼p3 and n1∼n2, respectively, and the plural transistors are turned on in response to the voltage drops. That is, the plural transistors p1∼p3 and n1∼n2 cooperate with the corresponding control circuit 410 to detect the ESD zap from the pad 250. Consequently, the internal circuit 240 can be effectively protected.

It is noted that numerous modifications and alterations may be made while retaining the teachings of the invention. For example, some electronic devices such as bipolar junction transistors (BJTs) or diodes may be coupled with the plural transistors in the fourth embodiment. Moreover, the diodes of the ESD circuit of the present invention can be replaced with other compatible components. For example, plural transistors connected as diodes can acquire similar characteristics of diodes.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An electrostatic discharge (ESD) circuit (200) connected with a pad (250), the ESD circuit (200) comprising:
plural transistors (Mp, Mn) coupled between the pad (250) and a first node (g) in a cascode configuration;
a control circuit (210) connected with the pad (250), the first node (g) and gate terminals of the plural transistors (Mp, Mn),
wherein a first portion of the plural transistors comprises at least one P-type transistors (Mp) and a second portion of the plural transistors comprises at least one N-type transistor (Mn),
wherein when the pad (250) receives an ESD zap, the control circuit (210) provides plural voltage drops to the plural transistors (Mp, Mn), respectively, and the plural transistors (Mp, Mn) are turned on in response to the voltage drops.

2. The ESD circuit as claimed in claim 1, wherein the plural transistors comprise:
a first P-type transistor, wherein a first source/drain terminal of the first P-type transistor is connected with the pad; and
a first N-type transistor, wherein a first source/drain terminal of the first N-type transistor is connected with a second source/drain terminal of the first P-type transistor, and a second source/drain terminal of the first N-type transistor is connected with a first node;
wherein when the pad receives the ESD zap, the control circuit provides a first voltage drop to the first P-type transistor and provides a second voltage drop to the first N-type transistor, and the first P-type transistor and the first N-type transistor are turned on in response to the first voltage drop and the second voltage drop.

3. The ESD circuit as claimed in claim 2, wherein the control circuit comprises:
a first resistor, wherein a first terminal of the first resistor is connected with the pad, and a second terminal of the first resistor is connected with a second node;
a second resistor, wherein a first terminal of the second resistor is connected with the first node, and a second terminal of the second resistor is connected with a third node; and
plural diodes connected between the second node and the third node in series,
wherein the gate terminal of the first P-type transistor is connected with the second node, and the gate terminal of the first N-type transistor is connected with the third node.

4. The ESD circuit as claimed in claim 3, wherein an anode terminal of the first diode of the plural diodes is connected with the second node, a cathode terminal of the last diode of the plural diodes is connected with the third node, an anode terminal of any of the other diodes is connected with a cathode terminal of a previous diode, and a cathode of any of the other diodes is connected with an anode terminal of a next diode.

5. The ESD circuit as claimed in claim 3 or 4, wherein when the pad receives the ESD zap, the control circuit receives a loading current, wherein the loading current flowing through the first resistor results in the first voltage drop, and the loading current flowing through the second resistor results in the second voltage drop.

6. The ESD circuit as claimed in anyone of the claims 2 to 5, wherein a body terminal of the first P-type transistor is connected with the pad, and a body terminal of the first N-type transistor is connected with the first node.

7. The ESD circuit as claimed in claim 1 or 2, wherein the control circuit comprises:
plural diodes connected between a second node and a third node in series; and
plural resistors,
wherein when the pad receives the ESD zap, the control circuit and the plural diodes receive a loading current, wherein the loading current flowing through the plural resistors result in the corresponding voltage drops.

8. The ESD circuit as claimed in claim 7, wherein an anode terminal of the first diode of the plural diodes is connected with the second node, a cathode terminal of the last diode of the plural diodes is connected with the third node, an anode terminal of any of the other diodes is connected with a cathode terminal of a previous diode, and a cathode of any of the other diodes is connected with an anode terminal of a next diode.

9. The ESD circuit as claimed in anyone of the claims 1 to 8, wherein the ESD circuit further comprises a switching transistor, and the switching transistor is connected between the pad and an internal circuit, wherein a first source/drain terminal of the switching transistor is connected with the pad, a second source/drain terminal of the switching transistor is connected with the internal circuit, and a gate terminal of the switching transistor receives a normal low signal.
